# EUROPÄISCHE PATENTSCHRIFT

(11) **EP 1 510 375 B1**
(45) Veröffentlichungstag und Bekanntmachung des Hinweises auf die Patenterteilung: **25.06.2008**
(21) Anmeldenummer: 03292092.8
(22) Anmeldetag: 25.08.2003
(51) Int. Cl.: B60H 1/00

(54) **Klimaanlage sowie Verfahren zum Betreiben einer solchen**
Air conditioning installation and method for operating one such installation
Installation de climatisation et procédé pour faire fonctionner une installation de ce type

(43) Veröffentlichungstag der Anmeldung: 02.03.2005
(73) Patentinhaber: Behr France Rouffach SAS, 68250 Rouffach (FR)
(72) Erfinder: Schlachter, Claude, 68480 Wolschwiller (FR)
(74) Vertreter: Grauel, Andreas

(56) Entgegenhaltungen:
- EP-A- 1 142 734
- DE-A- 3 016 679
- DE-A- 10 052 136
- FR-A- 2 742 383
- JP-A- 56 095 716
- US-B1- 6 311 763

## Beschreibung

Die Erfindung betrifft eine Klimaanlage, insbesondere für ein Kraftfahrzeug, gemäß dem Oberbegriff des Anspruchs 1, und wie offenbart in DE 10 052 136 A1.

Bei herkömmlichen Klimaanlagen gibt es insbesondere bei der Luftversorgung des Fußraums Unzulänglichkeiten, so dass keine schnelle und optimale Temperierung und Lufteinströmung in diesem Bereich des Kraftfahrzeugs erreicht wird.

Es ist Aufgabe der Erfindung, eine verbesserte Klimaanlage zur Verfügung zu stellen, insbesondere in Hinblick auf die Luftversorgung des Fußraums.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage für ein Kraftfahrzeug mit einem Luftkanalsystem, das ein Gebläse, einen Verdampfer und einen Heizkörper, gegebenenfalls mit PTC-Zuheizer, aufweist und das die temperierte Luft verschiedenen Bereichen des Kraftfahrzeugs über Luftkanäle zuführt, vorgesehen, wobei benachbart zum Verdampfer eine Bypass-Klappe angeordnet ist, durch welche im Heizbetrieb ein Teil der Luft den Verdampfer über einen Bypass umgehen kann. Dadurch, dass ein Teil der Luft den Verdampfer im normalen Heizbetrieb umgehen kann, verringert sich der Strömungswiderstand, so dass bei Bedarf dem Fußraum mehr Luft zugeführt werden kann.

Der Luftkanal zweigt zum Fußraum in nächster Nähe des Heizkörpers ab, wodurch der Strömungsweg und der damit verbundene Druckverlust gering gehalten wird.

Der Luftkanal zum Fußraum zweigt unmittelbar neben eines Defrost-Luftkanals ab, was eine gute Schichtung der Luft auch ohne Leitelemente bewirkt, so dass der Druckverlust durch Leitelemente vermieden werden kann.

Der Luftkanal ist mittels einer Fußraum-Klappe regelbar, wobei die Fußraum-Klappe am Einlass des Luftkanals angeordnet ist. Der Luftkanal verzweigt sich vorzugsweise direkt nach der Fußraum-Klappe, wodurch in Folge der direktesten Zuleitung zu den jeweiligen Austrittsöffnungen im Fußraum die Strömungswege der Luftkanäle gering gehalten werden können.

Im normalen Heizbetrieb wird erfindungsgemäß ein Teil der Luft über den Bypass am Verdampfer vorbeigeleitet, im Defrost-Betrieb, bei dem eine möglichst trockene Luft erforderlich ist, wird jedoch die gesamte Luft zum Entfeuchten durch den Verdampfer geleitet, so dass in diesem Fall die Bypass-Klappe geschlossen ist.

Im Folgenden wird die Erfindung anhand eines Ausführungsbeispiels unter Bezugnahme auf die Zeichnung im Einzelnen erläutert. In der Zeichnung zeigen:
- Fig. 1: einen Schnitt durch eine erfindungsgemäße Klimaanlage mit Darstellung der Schwenkbereiche der einzelnen Klappen,
- Fig. 2: eine Fig. 1 entsprechende Darstellung, welche die Belüftung mit kalter Luft zeigt,
- Fig. 3: eine Fig. 1 entsprechende Darstellung, welche die Defrost-Stellung zeigt,
- Fig. 4: eine Fig. 1 entsprechende Darstellung, welche die Beheizung des Fußraums zeigt, und
- Fig. 5: einen Schnitt entlang der Linie A-A in Fig. 4.

Eine erfindungsgemäße Klimaanlage 1 weist ein Gebläse 2, einen Verdampfer 3 und einen Heizkörper 4 mit PTC-Zuheizer 5 auf. Hierbei ist parallel zum Verdampfer 3 eine Bypass-Klappe 6 vorgesehen, welche einen benachbart zum Verdampfer 3 angeordneten Bypass freigibt oder verschließt, der ein Vorbeiströmen der vom Gebläse 2 kommenden Luft am Verdampfer 3 ermöglicht. Hinter dem Verdampfer 3 ist eine weitere Klappe 7 vorgesehen, welche die vom Verdampfer 3 kommende Luft entweder durch den Heizkörper 4 mit PTC-Zuheizer 5 oder an ihm vorbei leitet. Hierbei sind Zwischenstellungen möglich. Nach den Wärmetauschern 3 und 4 ist eine Defrost-Klappe 8 zum Entfernen eines Beschlags an der Windschutzscheibe, welche einen Defrost-Luftkanal bei Bedarf öffnet oder verschließt, und eine Belüftungs-Klappe 9 zum Belüften des Fahrzeuginnenraums z.B. über Mittelund Seitendüsen, welche einen Belüftungs-Luftkanal bei Bedarf öffnet oder verschließt, vorgesehen.

Ferner ist direkt nach dem Heizkörper 4 eine Fußraum-Klappe 10 angeordnet, welche einen Luftkanal 11 zum Fußraum nach Bedarf freigibt oder verschließt, wobei auch Zwischenstellungen möglich sind. Der Luftkanal 11 verzweigt sich unmittelbar nach der Klappe 10 in einen Luftkanal 11a, welcher der seitlichen Luftzufuhr zum Fußraum dient, und einen Luftkanal 11b, welcher der hinteren Luftzufuhr zum Fußraum dient.

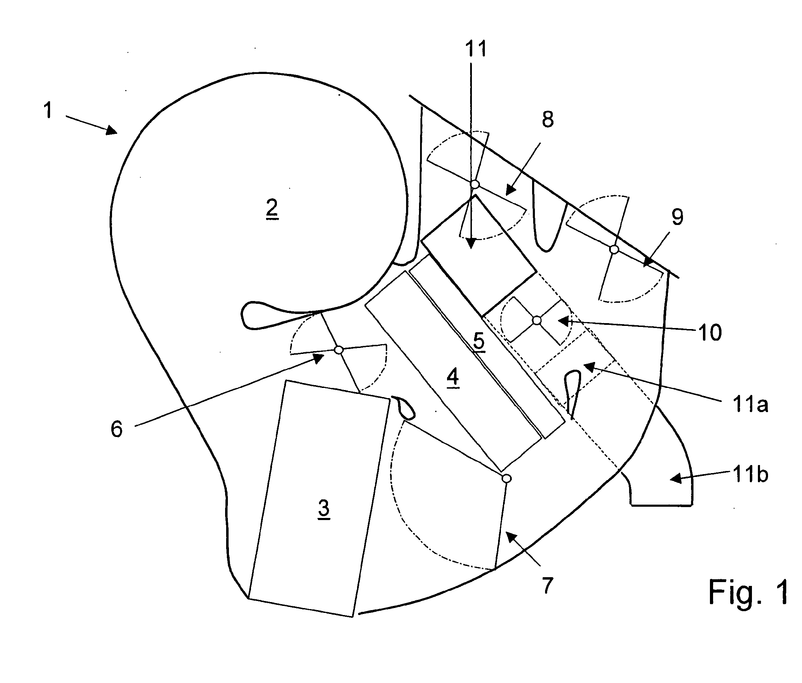

Wie aus der Darstellung der Figuren 1 bis 5 ersichtlich ist, ist der Luftkanal 11 mit seinen Verzweigungen 11a und 11b sehr kurz gehalten und verläuft mit möglichst wenig Umlenkungen. Der Luftkanal 11 zweigt neben dem Defrost-Luftkanal ab, weshalb sich eine gute Schichtung der Luftströmung auch ohne Leitelemente ergibt.

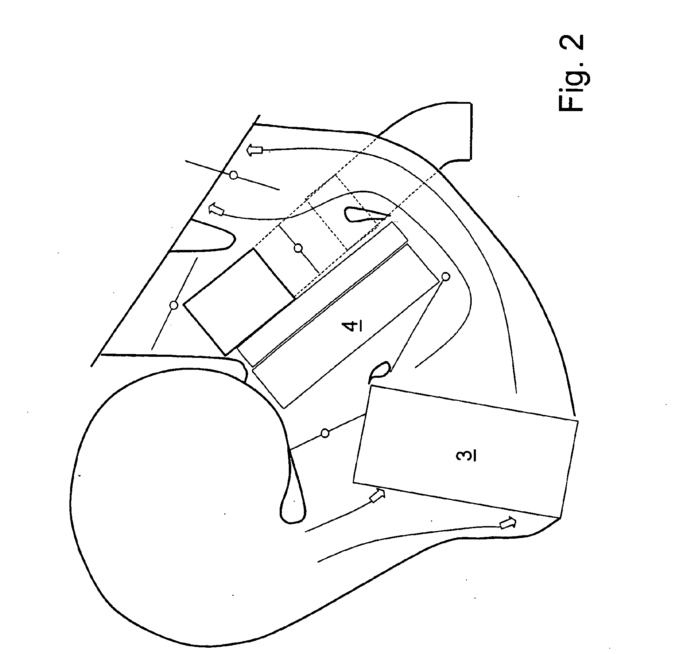

Fig. 2 zeigt den Kühl-Betrieb der Klimaanlage 1. Hierbei wird die gesamte Luft ausschließlich durch den Verdampfer 3 und vorbei am Heizkörper 4 geleitet und dem Fahrzeuginnenraum über den durch die Klappe 9 verschließbaren Luftkanal zugeführt. Der Strömungsverlauf der Luft ist in dieser und den folgenden Figuren durch Strömungslinien und Pfeile verdeutlicht.

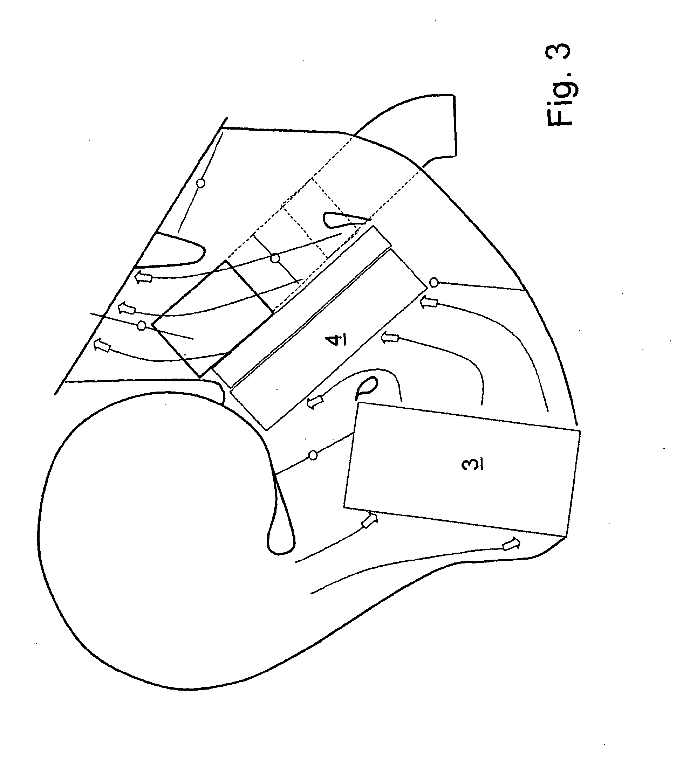

Fig. 3 zeigt den Defrost-Betrieb zum Entfernen eines Beschlags auf der Windschutzscheibe. Da hierbei eine möglichst trockene, warme Luft benötigt wird, wird die Luft zum Entfeuchten zuerst durch den Verdampfer 3 geleitet und anschließend zum Erwärmen durch den Heizkörper 4 und den PTC-Zuheizer 5.

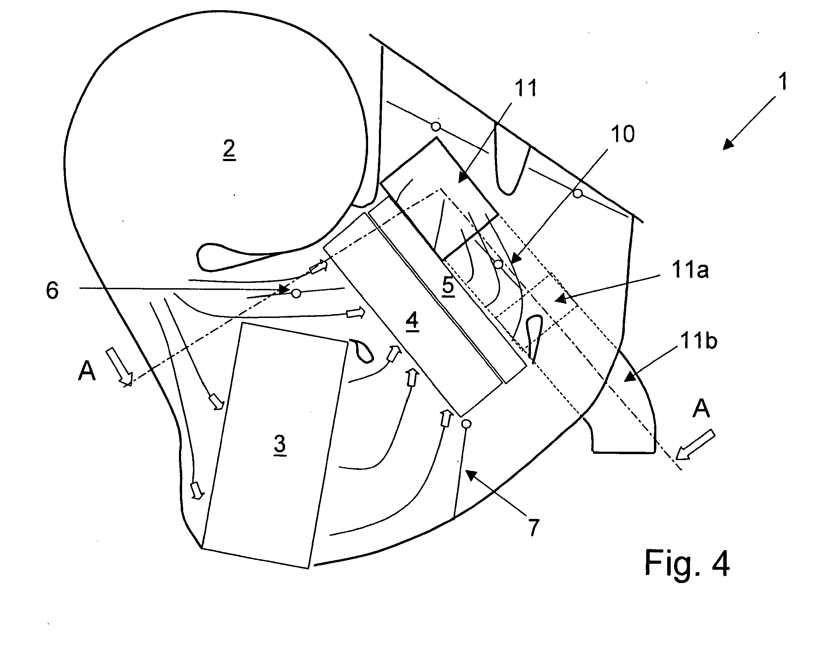

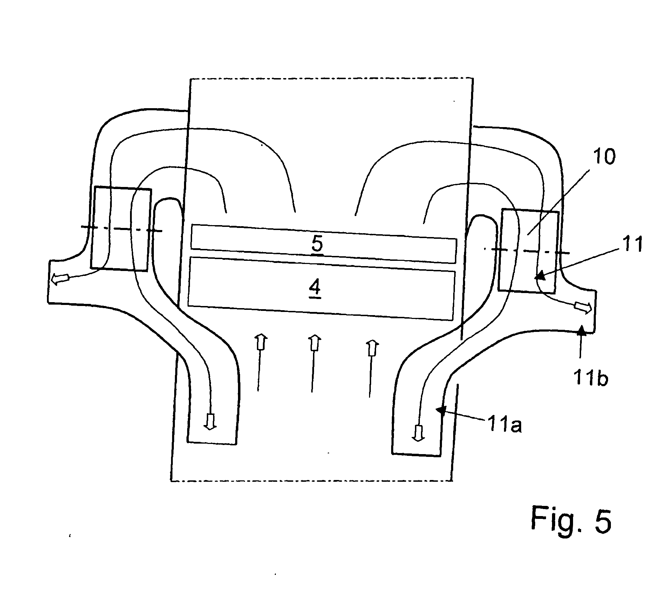

Figuren 4 und 5 zeigen einen Betrieb, in dem die gesamte Luft als warme Luft dem Fußraum des Kraftfahrzeugs zugeführt wird. Hierbei wird ein Teil der Luft am Verdampfer 3 vorbei und ein Teil der Luft durch den Verdampfer 3 geleitet, wobei der durch den Verdampfer 3 geleitete Teil der Luft entfeuchtet wird. Die beiden Teil-Luftströme werden vereinigt und gemeinsam durch den Heizkörper 4 und den PTC-Zuheizer 5 geleitet. Anschließend strömt der gesamte Luftstrom durch die offene Fußraum-Klappe 10 in den Luftkanal 11, wo sie auf die beiden Luftkanäle 11a und 11b verteilt und dem Fußraum zugeführt wird. Hierbei sind die Strömungswege der Luft minimiert.

### Bezugszeichenliste

1 Klimaanlage
2 Gebläse
3 Verdampfer
4 Heizkörper
5 PTC-Zuheizer
6 Bypass-Klappe
7 Klappe
8 Defrost-Klappe
9 Belüftungs-Klappe
10 Fußraum-Klappe
11, 11a, 11b Luftkanal

## Patentansprüche

1. Klimaanlage für ein Kraftfahrzeug mit einem Luftkanalsystem, das ein Gebläse (2), einen Verdampfer (3) und einen Heizkörper (4) aufweist und die temperierte Luft verschiedenen Bereichen des Kraftfahrzeugs über Luftkanäle (11, 11a, 11b) zuführt, wobei benachbart zu dem Verdampfer (3) eine Bypass-Klappe (6) angeordnet ist, durch welche im Heizbetrieb ein Teil der Luft den Verdampfer (3) über einen Bypass umgehen kann, **dadurch gekennzeichnet, dass** der Luftkanal (11) zum Fußraum in nächster Nähe des Heizkörpers (4), und unmittelbar neben einem Defrost-Luftkanal abzweigt, wobei der Luftkanal (11) mittels einer Fußraum-Klappe (10), die am Einlass des Luftkanals (11) angeordnet ist regelbar ist und sich direkt nach der Fußraum-Klappe (10) verzweigt.

2. Verfahren zum Betreiben einer Klimaanlage (1) gemäß Anspruch 1, wobei im normalen Heizbetrieb ein Teil der Luft am Verdampfer (3) vorbeigeleitet wird.

3. Verfahren nach Anspruch 2, **dadurch gekennzeichnet, dass** im Defrost-Betrieb die gesamte Luft durch den Verdampfer (3) geleitet wird.

## Claims

1. Air-conditioning installation for a motor vehicle with an air duct system, which comprises a fan (2), an evaporator (3) and a heater (4) and which passes the temperature-controlled air via air ducts (11, 11a, 11b) to various zones of the vehicle, a bypass flap-valve (6) being positioned close to the evaporator (3) through which, during heating operation, some of the air can bypass the evaporator (3) through a bypass, **characterised in that** the air duct (11) to the footspace is in the immediate vicinity of the heater (4) and branches off directly next to a defrost air duct, and the air duct (11) can be regulated by means of a footspace flap-valve (10) arranged at the outlet of the air duct (11) and branches off directly after the said footspace flap-valve (10).

2. Method for the operation of an air-conditioning installation (1) according to Claim 1, in which part of the air bypasses the evaporator (3) during heating operation.

3. Method according to Claim 2, **characterised in that** in defrost operation all of the air passes through the evaporator (3).

## Revendications

1. Système de climatisation pour un véhicule automobile, comprenant un système de conduits d'air qui présente un ventilateur (2), un évaporateur (3) et un radiateur (4) et, par des conduits d'air (11, 11a, 11b), fournit l'air tempéré à différentes zones du véhicule automobile, où un volet de dérivation (6) est disposé de façon contiguë à l'évaporateur (3), volet de dérivation à travers lequel, une partie de l'air, au cours du fonctionnement en mode chauffage, peut contourner l'évaporateur (3), via une dérivation,
**caractérisé en ce que** le conduit d'air (11) menant à l'espace pour les pieds, bifurque à proximité immédiate du radiateur (4) et directement à côté d'un conduit d'air de dégivrage, où le conduit d'air (11) est réglable au moyen d'un volet (10) de l'espace pour les pieds, volet qui est disposé au niveau de l'entrée du conduit d'air (11), ledit conduit d'air bifurquant directement en aval du volet (10) de l'espace pour les pieds.

2. Procédé de fonctionnement d'un système de climatisation (1) selon la revendication 1 où, au cours du fonctionnement normal en mode chauffage, une partie de l'air est dirigée en passant devant l'évaporateur (3).

3. Procédé selon la revendication 2, **caractérisé en ce que** la totalité de l'air, au cours du fonctionnement en mode dégivrage, est dirigée à travers l'évaporateur (3).
